(19) **Europäisches Patentamt European Patent Office Office européen des brevets**

(11) **EP 1 316 067 B1**

(12) **EUROPEAN PATENT SPECIFICATION**

(45) Date of publication and mention of the grant of the patent:
**27.05.2015 Bulletin 2015/22**

(21) Application number: **01963137.3**

(22) Date of filing: **22.08.2001**

(51) Int Cl.:
***G06T 7/20*** *(2006.01)*

(86) International application number:
**PCT/GB2001/003802**

(87) International publication number:
**WO 2002/021446 (14.03.2002 Gazette 2002/11)**

(54) **ANALYSING A MOVING IMAGE**

ANALYSE EINES SICH BEWEGENDEN BILDES

ANALYSE D'UNE IMAGE ANIMEE

(84) Designated Contracting States:
**DE FR GB**

(30) Priority: **08.09.2000 EP 00307771**
**08.02.2001 PCT/GB01/00504**

(43) Date of publication of application:
**04.06.2003 Bulletin 2003/23**

(73) Proprietor: **BRITISH TELECOMMUNICATIONS**
**public limited company**
**London**
**EC1A 7AJ (GB)**

(72) Inventor: **STENTIFORD, Frederick Warwick**
**Michael**
**Woodbridge,**
**Suffolk IP12 3LH (GB)**

(74) Representative: **Lidbetter, Timothy Guy Edwin et**
**al**
**BT Group Legal**
**Intellectual Property Department**
**PP C5A, BT Centre**
**81 Newgate Street**
**London**
**EC1A 7AJ (GB)**

(56) References cited:
• **WIXSON L: "DETECTING SALIENT MOTION BY ACCUMULATING DIRECTIONALLY-CONSISTENT FLOW" IEEE TRANSACTIONS ON PATTERN ANALYSIS AND MACHINE INTELLIGENCE, IEEE INC. NEW YORK, US, vol. 22, no. 8, August 2000 (2000-08), pages 774-780, XP000976485 ISSN: 0162-8828**

**Description**

This invention relates to a system for locating salient objects or features contained within a moving image.

Existing systems for gauging visual attention extract previously specified features (e.g. colour, intensity, orientation) from images, and then train classifiers (e.g. neural networks) to identify areas of high attention. These trainable models rely heavily on the selection of the features to be searched for in the image, and have no way of handling new visual material that has little similarity with that used to design and test the system. Paradoxically, a feature may simply be too anomalous to be identified as such by a trained system. Such systems also require considerable computational resource in order to process the pre-selected features and moreover this burden increases without limit as the scope of the procedure is extended and more features are added.

According to one aspect of the present invention there is provided a method of processing a moving image, for identifying areas of visual attention, comprising:

storing successive pictures of the moving image as respective arrays of picture element values;

defining a test group of picture elements comprising a first test picture element and a second test picture element having a spatial offset and a temporal offset from the first;

defining a comparison group of picture elements comprising a first comparison picture element having a spatial and temporal offset from the first test picture element and a second comparison picture element having a spatial and temporal offset from the first comparison picture element equal respectively to the spatial and temporal offset of the second test picture element from the first test picture element;

comparing the picture element values of the first and second test picture elements with the picture element values of the first and second comparison picture elements respectively, in accordance with a predetermined match criterion;

defining further such comparison groups and comparing the test pictures element with those of the further comparison groups;

generating a visual attention measure for the first test picture element in dependent on the number of comparisons made for it which the comparison results in a mismatch.

The invention may be used to identify the principal subject in a visual scene, by identification of the region containing pixels having the greatest anomaly values. It may be used to determine a measure of visual attention afforded to a given object in a visual scene by comparison of the anomaly values generated for the pixels representing that object with the anomaly values generated for other parts of the scene.

The repetitive nature of the process lends itself to parallel processing, and it should be understood that several test pixels may be processed in parallel with each other, and for each test pixel, several groups of neighbour pixels may also be processed in parallel.

In order to allow for minor variations in intensity between otherwise similar elements of a scene, the comparison of values preferably allows a small difference in values between two pixels to be considered a match, and the term "substantially similar" used above should be understood in that context. The value of this threshold difference may be varied for different cycles, those values which produce a suitable distinction between elements being stored and re-used on subsequent cycles of the process.

For a colour image the intensity values may be three-element (red, green, blue) vectors. Alternatively other colour spaces such as hue, saturation, luminance etc. may be used.

In another aspect, the invention provides a method of processing a sequence of visual images, for identifying areas of visual attention, comprising the steps of:

storing a sequence of images as a multi dimensional array of pixels, each pixel having a value;

selecting test pixels from the array,

for each test pixel, selecting one or more neighbour groups of pixels neighbouring the test pixel;

selecting comparison pixels from the array;

identifying a group of pixels neighbouring a selected comparison pixel having the same respective positional relationships to the comparison pixel as a selected neighbour group of pixels has to the test pixel;

comparing the values of the selected neighbour group with the values of the identified group in accordance with a predetermined match criterion,

generating a measure of visual attention for each test pixel, in dependence upon the number of comparisons made for that test pixel for which the comparison results in a mismatch.

This invention identifies saliency in visual scenes by measuring the difficulty in finding similarities between neighbourhoods in the scene. Pixels in an area that is similar to much of the rest of the scene therefore score low measures of visual attention, so are not considered to be worthy of attention. On the other hand a region that possesses many dissimilarities with other parts of the image will attract a high measure of visual attention, as the anomaly values scored will be large.

The invention makes use of a trial and error process to find dissimilarities between parts of the image and does not require prior knowledge of the nature of the anomalies to determine saliency. The method avoids the use of processing dependencies between pixels and is capable of a straightforward parallel implementation for each pixel.

A preferred embodiment will now be described, by way of example, with reference to the figures, in which

Figure 1 illustrates schematically the basic components of a general purpose computer capable of performing the invention;

Figure 2 is a flowchart illustrating the analysis of a still picture.

Figure 3 represents a still picture to be processed by the method of Figure 1;

Figure 4 is a flowchart illustrating the operation of an embodiment of the invention;

Figure 5 illustrates the processing of consecutive frames of the moving picture; and

Figure 6 shows example selection of test pixel groups in order to increase processing speed.

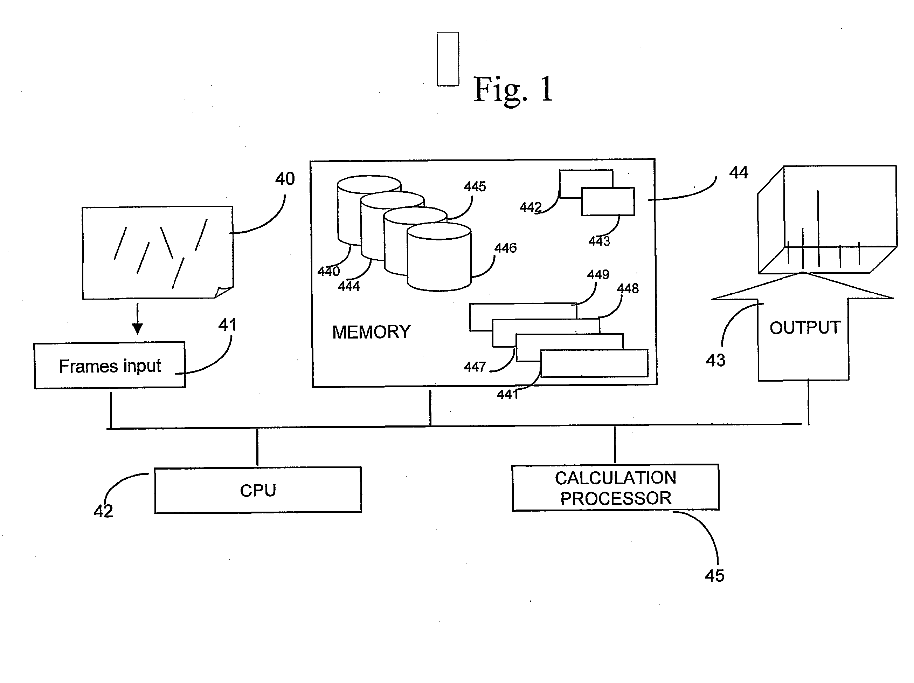

The components illustrated in Figure 1 comprise an input means 41, comprising a video input and a frame capture device (of conventional construction) for storing several consecutive frames of an image in a store 440. In the examples given below, the store 440 would need to contain three, or four, consecutive frames. Figure 1 also shows a central processing unit (CPU) 42, an output unit such as a visual display unit (VDU) or printer 43, a memory 44, and a calculation processor 45. The memory includes stores 440, 444 - 446, registers 441, 447 - 449 and counters 442, 443. The data and the programs for controlling the computer are stored in the memory 44. The CPU 42 controls the functioning of the computer using this information.

By way of introduction, we firstly describe a method analysing a still picture (a single frame), though it is to be understood that the present invention does not extend to this method, which is described and claimed in our co-pending international patent application no. PCT/GB01/00504.

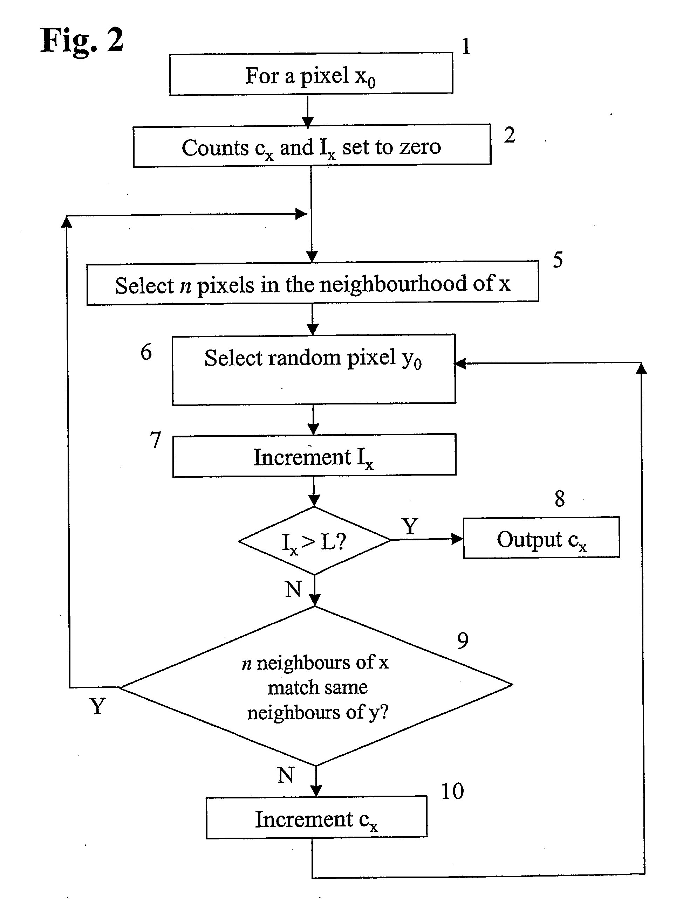

Considering now Figures 1 and 2, an image 40 to be analysed is accessed by the input means 41 and stored in a digital form in an image store 440, as an array A of pixels $x$ where each pixel has colour intensities $(r_x, g_x, b_x)$ attributed to it.

A pixel $x_0$ is then selected from the array A (step 1), and its intensity value $(r_x, g_x, b_x)$ is stored in a test pixel register 441.

An anomaly count $c_x$, stored in an anomaly counter 442, and a count of the number of pixel comparisons $I_x$ (stored in a comparison counter 443) are both set to zero (step 2).

The next step is the random selection of a number of points in the vicinity of the test pixel $x_0$. This region is defined by a distance measure $u_x$ (typically in units of pixels). Thus, n pixels $x_j$ are selected such that

$$\mathrm{dist}(x_j - x_{j-1}) < u_x$$

where j =1, ..., n and $x_0 = x$.

The distance used may be any of those conventionally used, such as the Euclidean distance or the "city block distance between the positions within the image of the two pixels. If the horizontal and vertical coordinates of $x_j$ are $p(x_j)$

and q($x_j$) then the Euclidean distance is

$$\sqrt{\left[p(x_j) - p(x_{j-1})\right]^2 + \left[r(x_j) - r(x_{j-1})\right]^2}$$

whilst the city block distance is

$$\left|p(x_j) - p(x_{j-1})\right| + \left|r(x_j) - r(x_{j-1})\right|$$

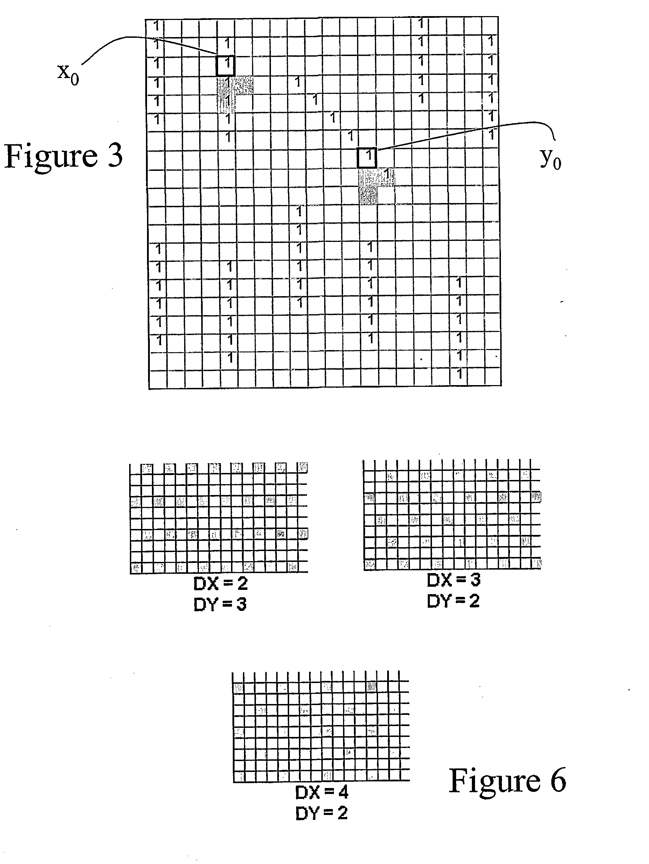

Typically n = 3 , and $u_x$ = 1. An example of such a group is shown in Figure 3, in which the test pixel, (shown boxed) has pixels (shown shaded) associated with it. For $u_x$ = 1, the pixels are contiguous, but, in general the pixels may not necessarily neighbour one another or be contiguous in any sense. The definition of the neighbour pixels is stored in the neighbour group definition store 444.

A pixel $y_0$ is now selected randomly (step 6) from the array A to be the current comparison pixel (also shown boxed in Figure 3) whose identity is stored in a comparison pixel register 447.

The value of $I_x$ stored in the comparison counter 443 is incremented (step 7): if a limit L is exceeded, no further comparisons for the test pixel x are made (step 8). The contents of the neighbour group definition register 444 are then used by the calculation processor 45 to define a set of pixels forming a test group $x_j$ (register 448) and a set of pixels forming a comparison group $y_j$ (register 449), each pixel $y_j$ of the comparison group having the same positional relationship to the comparison pixel y as the corresponding pixel $x_j$ in the test group has to the test pixel x (step 9).

The calculation processor 45 then compares each of the pixels $x_j$ (shaded in Figure 3) with the corresponding pixel $y_j$ (also shown shaded), using a set of threshold values $\Delta r_x$, $\Delta g_x$ and $\Delta b_x$.

A pixel y is identified as being similar to a test pixel x if :

$$|r_y - r_x| < \Delta r_x$$

and

$$|g_y - g_x| < \Delta g_x$$

and

$$|b_y - b_x| < \Delta b_x.$$

- where $\Delta r_x$, $\Delta g_x$ and $\Delta b_x$ are threshold values which are, in this embodiment, fixed.

If all the pixels $x_j$ in the test group are similar to their corresponding pixels $y_j$ in the comparison group, the process is repeated by selecting a new set of neighbouring pixels (step 5) and a new comparison pixel $y_0$ (step 6). If (as illustrated in Figure 3) one or more pixels $x_j$ in the test group are not similar to the corresponding pixel $y_j$ in the comparison group, in accordance with the similarity definition above, the count $c_x$ stored in the anomaly count register 442 is incremented (step 10). Another comparison pixel $y_0$ is randomly selected and stored in the comparison pixel register 447 (return to step 6) and the neighbour group definition retrieved from the neighbour group definition store 444 is used to supply a new comparison neighbour group to the comparison group register 449 for comparison with the test group stored in the test group register 448. A set of pixels $x_j$ is retained in the test group register 448 so long as it continues to fail to match other parts of the image. Such a set represents a distinguishing feature of the locality of x - the more failures to match that occur, the more distinctive it is. The more comparison pixels y that the test pixel x fails to provide matches for, the higher the anomaly value $c_x$ stored in the anomaly counter 442 becomes. Conversely, the more matches that the test pixel x generates, the lower the value of the anomaly value when the threshold L is reached by the comparison counter 443. As L comparisons are made each time, the anomaly value $c_x$ which results from the process may be considered to be a measure of the proportion of randomly selected pixels which would fail to provide a match for the test pixel x.

When the iteration value $I_x$ stored in the comparison counter 443 reaches the threshold value L, the iterative process stops (step 8) and the current anomaly value $c_x$ stored in the anomaly counter 442 is output at the output unit 43 as the anomaly value for the pixel x. This final anomaly value $c_x$ is the measure of visual attention for the test pixel x, and is the number of attempts (from a total of L attempts) for which the inherent characteristics (i.e. the colours) of randomly selected neighbours of pixel x failed to match the corresponding neighbours of randomly selected pixels y. A high value for $c_x$ indicates a high degree of mismatch for pixel x with the rest of the image and consequently that pixel x is part of an object worthy of visual attention.

In this embodiment, the process is repeated, from step 1, for every pixel in the image as the test pixel, so that a value $c_x$ is obtained for every pixel x in the array A. Typically, L may be set to be 100.

As described above, comparisons are performed for the neighbouring pixels $x_j, y_j, j=i,...n$; however, if desired, the original or root pixels may also be included, the comparisons being performed for $j = 0, ...,n$.

The output unit 43 is typically a storage medium which stores the anomaly values of each pixel for display by means of a printer, visual display unit, etc. or for subsequent processing.

We now turn to the description of an embodiment of the present invention in which the aim is to analyse a moving picture where pixel values are a function of horizontal and vertical position, and time.

Suppose that each pixel value $\underline{a}$ is a function of p, q and t, i.e. the horizontal and vertical position within the picture, and time expressed as a number of frames. As before, we wish to compare a test group of pixels $\underline{x} = (x_0, x_1, x_2, ... x_n)$ where $x_j$ has spatial coordinates $p_j, q_j$ and time $t_j$ with randomly selected comparison groups such as $\underline{y} = (y_0, y_1, y_2 ... y_n)$ (where $y_k$ is $p_k, q_k, t_k$). $x_1, x_2$ etc. are chosen to lie within some distance in p, q, t space of a starting pixel $x_0, y_1, y_2$ etc. have in this space the same positions relative to yo; that is:

$$p(x_j) - p(x_0) = p(y_j) - p(y_0)$$

$$q(x_j) - q(x_0) = q(y_j) - q(y_0)$$

$$t(x_j) - t(x_0) = t(y_j) - t(y_0)$$

As before, the spatial displacements of $x_j$ from $x_0$ (or $x_{j-1}$) are selected at random subject to a limit $u_x$. The temporal displacements could also be selected at random within a time limit $\tau$, or if desired could be zero, so that $x_j$ are all from the same frame, but we prefer to avoid selecting a test group (or comparison group) entirely from one frame, and therefore we apply an additional constraint that at least one pixel is selected from a different frame from the one in which the "root" pixel $x_0$ (or $y_0$) lies. Thus, in this example, we choose n = 1 and require that $t(x_1) - t(x_0) \equiv t(y_1-y_0) \equiv 1$ that is, every group of pixels consists of a pixel from one frame t and a pixel from the following frame. Further, we prefer that the comparison pixel $y_0$ is always chosen from a different frame from the one in which $x_0$ lies: in this example we require that $t(y_0) = t(x_0) = t(x_0)+1$ so that the comparison group is one frame later in time than the test group.

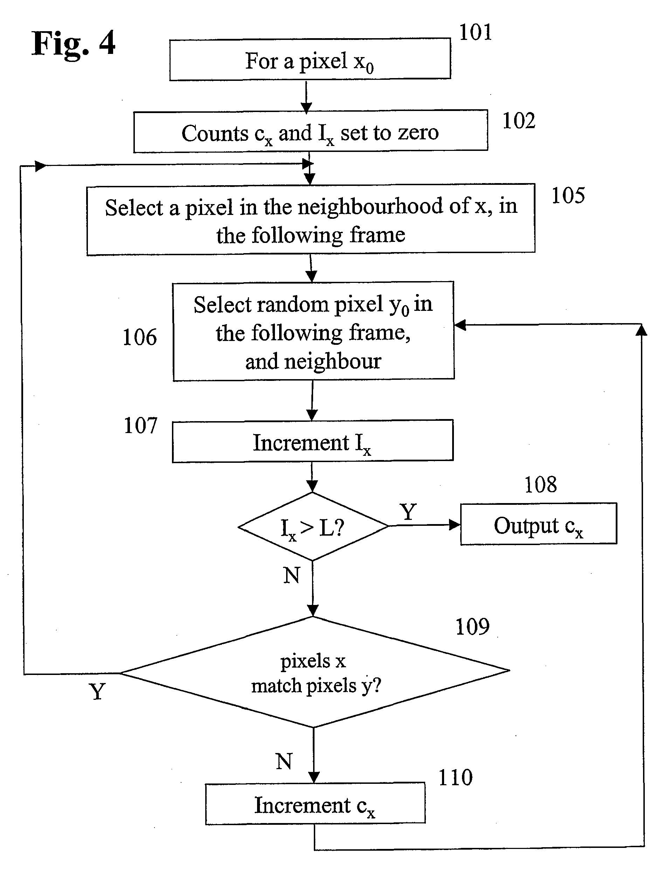

The procedure used is shown in Figure 4:

Step 101. Test pixel $x_0$ : (p, q, t) = (1, 1, T-1).
Step 102. Set $c_x$ and $I_x$ to zero.
Step 105. Choose at random a pixel $x_1 = (p+\Delta p, q+\Delta q, T)$, with $\Delta p \leq u_x$, $\Delta q \leq u_x$.
Step 106. Choose pixel $y_0 = (p', q', T)$ where p', q' are selected at random from the array; Define pixel $y_1 = (p'+\Delta p, q'+\Delta q, T+1)$
Step 107. Increment $I_x$. If the number of comparisons $I_x > L$, $c_x$ contains the score for x: choose a new pixel $x_1$ and go to step 102.
Step 109. Test for a match between x and y - i.e.
if $|r(x_0) - r(y_0)| \leq \Delta r$
and $|g(x_0) - g(y_0)| \leq \Delta g$
and $|b(x_0) - g(y_0)| \leq \Delta g$
and $|r(x_1) - r(y_1)| \leq \Delta r$
and $|g(x_1) - g(y_1)| \Delta g$
and $|b(x_1) - b(y_1)| \leq \Delta b$
a match has been found.
If a match is found, go to step 105.
Step 110. If no match is found, increment $c_x$ and go to step 106.

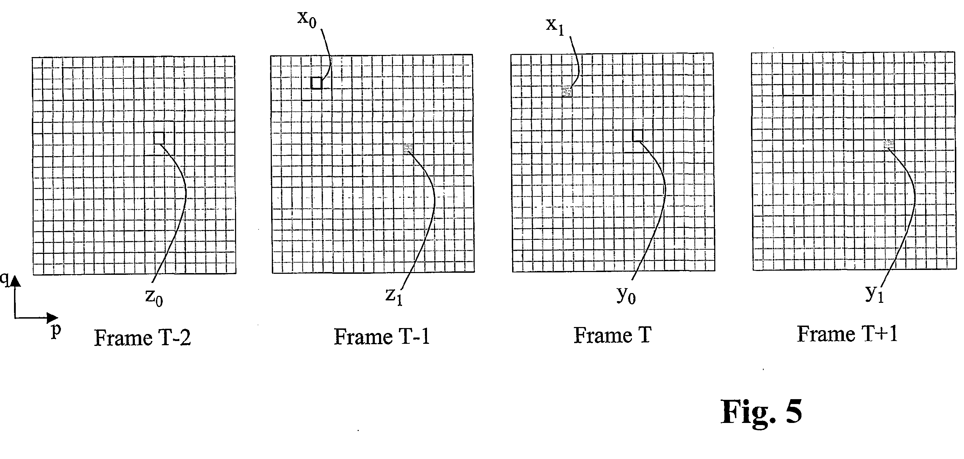

Whilst the above gives satisfactory results, it can be improved by choosing a third pixel group consisting of

pixel $z_0$ in frame T-2 having the same absolute position as $y_0$ and choosing pixel $z_1$ in frame T-1 having the same absolute spatial position as $y_1$. The procedure is substantially the same, the criterion for a match being that x matches both y and z. For the purposes of illustration, Figure 5 shows four frames T-2, T-1, T and T+1, with a pixel $x_0$ in frame T-1 and its neighbour $x_1$ in frame T with a spatial offset (1,-1), whilst pixels $y_0$ in frame T and $z_0$ in frame T-2 have the same spatial position as each other. Their neighbours $y_1$, $z_1$ (in frames T+1 and T-1) have the same spatial offset (1,-1) from $y_0$ or $z_0$, respectively, as $x_1$ has from $x_0$. The 3x3 boxes in the Figure simply serve to mark the same positions in consecutive frames.

Some modifications will now be discussed:

1. The thresholds used in an embodiment of the invention for colour images will depend upon the colour space in which the comparison between pixels is carried out. In another embodiment of the invention operating on colour images in the hue, saturation, value (HSV) space $\Delta h_x$, $\Delta s_x$, $\Delta v_x$ colour difference thresholds can be used. Here, pixel values consist of $h_x$, $s_x$ and $v_x$ and the calculation is carried out in the HSV colour space pixel y is identified as being similar to test pixel x is:

$$\left| v_y - v_x \right| < \Delta v_x, \text{ and } \left| s_y - s_x \right| < \Delta s_x, \text{ and } \left| h_y - h_x \right| < \Delta h_x$$

where $\Delta h_x = Z*(2 - v_x)*(2 - s_x)$. Z is stored in an empirical table of thresholds dependent upon $h_x$. This results in a larger value of $\Delta h_x$ for low values of $v_x$ and $s_x$.

Alternatively, for a grey-scale image, single luminance values $t_x$ and a luminance difference threshold $\Delta t_x$ would be used.

2. The selection of a group of n pixels $x_j$ in the neighbourhood of the test pixel x from the image store 440 may be made such that:

$$\text{dist}(x_j, x_{(j-1)}) < u_x$$

where j = 1, ..., n and $x_0 = x$

If desired, $u_x$ may vary with j: this allows pixels to be selected from a wide region whilst ensuring that some of the selected pixels are close to the test pixel $x_0$. The value of dist $(x_j, x_{(j-1)})$ may be defined in any suitable units, such as pixel size. The definition of the neighbour group is stored in the neighbour group definition store 444.

Alternatively, a group of n pixels $x_j$ in the neighbourhood of the test pixel x can be selected from the image store 440, the selection being such that:

$$\text{dist}(x_0, x_{(j)}) < u_x$$

where j = 1, ..., n and $x_0 = x$

As in the case of the still image, the distance function used can be any of those conventionally employed.

3. In the first embodiment of the invention the colour difference thresholds were predetermined and were not changed with each selection of a new neighbour group definition strategy. Alternatively the search strategy selected by the CPU 42 and provided to a neighbour group definition store 444 may comprise a set of colour difference thresholds $(\Delta r_x, \Delta g_x, \Delta b_x)$, (or in the case of grey level images a single threshold $\Delta t_i$), as well as the neighbour group definition. Previously generated search strategies, comprising neighbour pixel groups definitions $x_j$ and associated colour difference thresholds $(\Delta r_x, \Delta g_x, \Delta b_x)$ stored in the search strategy store 445 as a result of achieving a high anomaly score on previous test pixels may be preferentially selected by the CPU 42, randomly generated candidates only being supplied by the processor 42 to the current neighbour group definition store 444 when the supply of such stored criteria is exhausted. This mechanism reduces the number of unsuccessful iterations of the process and enhances the anomaly values in the vicinity of the object of attention by reusing features that highlight mismatches in the current image.

Similarly, test groups that have achieved high anomaly scores on previous tests may be retrieved from the search strategy store 445.

As the process continues, successful search strategies (that is, combinations of values of $\Delta r_x$, $\Delta g_x$, $\Delta b_x$ and $u_x$, and neighbour groups, which generate high values of $c_x$) will become apparent. If a group of n pixels $x_j$ and the corresponding colour difference thresholds $(\Delta r_x, \Delta g_x, \Delta b_x)$ cause the anomaly value of $c_x$ stored in the anomaly counter 442 to reach a threshold M before a match is found, the search strategy stored in the neighbour group definition store 444 is copied to the search strategy store 445 for future use, if it is not already stored. The strategies that have generated high anomaly values are thus available in the search strategy store 445 for use in selecting suitable values in further cycles. Once a match is found, the process starts again with a new search strategy (colour difference threshold and neighbour set) stored in the neighbour group definition store 444, either by retrieval from the search strategy store 445 or generated randomly.

Initially the search strategies will be generated at random by the CPU 42, - if the strategy is not suitable for identifying differences the cycle will be rejected and a new strategy selected. Successful strategies can be stored in a search strategy store 445 for subsequent re-use.

5. Several test pixels may be processed in parallel, but for purposes of illustration only one will be considered here.

6. In the above examples, an anomaly value $c_x$ is formed for every pixel of the array. However, in order to increase the speed of operation, the values $c_x$ may be formed only for a subset of the pixels, for example on a regular grid such as represented by the shaded pixels in one of the layouts shown in Figure 6. Once attention values have been generated for the pixels in the subset, then further pixels in the vicinity of those having a high measure $c_x$ may then be processed. For example one might choose the top 20% of the pixels (in terms of measures $c_x$) and process the pixels within a small defined area of each.

In the illustrated embodiment the pixels form a regular rectilinear tessellation, but the process is suitable for other arrangements of pixels. If the array is irregular, the positional relationship of each pixel $y_j$ to the comparison pixel y may not be exactly the same the positional relationship of each pixel $x_j$ to the test pixel x, but each one will be the closest possible to the exactly corresponding position.

The process possesses several advantages over other procedures. Firstly the process makes no assumptions about the content of the image and is able to extract useful features relevant to the content as part of the measurement process and hence is able to adapt to the material in any image. Secondly the process applies equally to any configuration of pixels whether arranged in a rectangular array, a spiral array, or an irregular pattern. Thirdly the process may be applied to each pixel $x_i$ without any dependency on the computations associated with other pixels and hence may be applied in parallel to many pixels simultaneously. This means that with a parallel implementation results may be obtained from video material in real time, or even faster. Fourthly the algorithm is based upon an evolutionary procedure which has the advantage that trials do not have to be prepared with the rigour normally afforded software processes. Some cycles may not produce useful results, for example because they contain obvious redundancy (e.g. a group of neighbour pixels $x_j$ which includes the same pixel more than once). Such cycles are rejected in the same way as any other cycle that fails to identify distinguishing features, without any special rejection process being necessary to identify such groups. This effectively removes the computational burden required to accurately construct viable candidates for trial.

It will be noted that the process does not require any previous knowledge of the nature of the anomalies being searched for. The anomaly may be in orientation (as in Figure 3), spacing, shape, length, colour or any other characteristic.

The invention is of wide application in a number of fields. Firstly, identification of the principal subject in a visual scene is the first essential stage in the categorisation of unfiltered visual content - it is also the most difficult. Once this step has been achieved, it may be followed by manual tagging, or a range of template matching or other automatic techniques for recognition of the features so identified.

## Claims

1. A method of processing a moving image, for identifying areas of visual attention, comprising:

storing successive pictures of the moving image as respective arrays of picture element values;
defining a test group of picture elements comprising a first test picture element and a second test picture element having a spatial offset and a temporal offset from the first;
defining a comparison group of picture elements comprising a first comparison picture element having a spatial and temporal offset from the first test picture element and a second comparison picture element having a spatial and temporal offset from the first comparison picture element equal respectively to the spatial and temporal offset of the second test picture element from the first test picture element;
comparing the picture element values of the first and second test picture elements with the picture element values of the first and second comparison picture elements respectively, in accordance with a predetermined match criterion;
defining further such comparison groups and comparing the test picture elements with those of the further comparison groups;
generating a visual attention measure for the first test picture element in dependence on the number of comparisons made for it which the comparison results in a mismatch.

**2.** A method according to Claim 1 including: defining at least one further comparison group comprising a first further comparison element having the same spatial offset from the first test picture element as has the first comparison picture element, but a different temporal offset, and a second further comparison picture element having the same offset from the first further comparison picture element as the second test picture element has from the first test picture element, and the comparing step includes comparing values of the first and second further comparison picture elements with the values of the first and second test picture elements respectively.

**3.** A method according to Claim 1 or 2 in which the test group and the or each comparison group includes at least one additional picture element.

**4.** A method according to Claim 1,2 or 3 comprising defining a subset of said pixel array and generating said measure of visual attention in respect of test pixels in said subset.

**5.** A method according to Claim 4, comprising the further steps of identifying one or more of said test pixels for which said measure is indicative of a large number of mismatches relative to the measures generated for others of said test pixels and generating said measures for further test pixels in the vicinity of said one or more identified test pixels.

**6.** A method according to any one of the preceding claims wherein, for each test pixel, if the comparison results in a match, a new offset for the second test picture element is chosen.

**7.** A method according to any one of the preceding claims, wherein a plurality of test picture elements are analysed concurrently.

**8.** A method according to any one of the preceding claims, wherein the value is a three-element vector representative of a colour.

**9.** A method according to any one of the preceding claims wherein in addition to neighbour groups, further variable search parameters are selected.

**10.** A method according to claim 6, wherein the further variable search parameters include a threshold value for the determination of whether two picture element values are substantially similar.

**11.** A method according to any one of the preceding claims including the further step of

(a) identifying ones of said positional relationships which give rise to a number of consecutive mismatches which exceeds a threshold;
(b) storing a definition of each such identified relationship; and
(c) utilising the stored definitions for the processing of further test pixels.

**Patentansprüche**

**1.** Verfahren zur Verarbeitung eines sich bewegenden Bildes zur Identifizierung von Bereichen visueller Aufmerksamkeit, das umfasst:

Speichern aufeinanderfolgender Einzelbilder des sich bewegenden Bildes als entsprechende Anordnungen von Bildelement-Werten,
Festlegen einer Testgruppe von Bildelementen, die ein erstes Test-Bildelement und ein zweites Test-Bildelement, das einen räumlichen Abstand und einen zeitlichen Abstand von dem ersten Test-Bildelement aufweist, umfasst,
Festlegen einer Vergleichsgruppe von Bildelementen, die ein erstes Vergleichs-Bildelement, das einen räumlichen Abstand und einen zeitlichen Abstand von dem ersten Test-Bildelement aufweist, und ein zweites Vergleichs-Bildelement umfasst, das einen räumlichen Abstand und einen zeitlichen Abstand von dem ersten Vergleichs-Bildelement aufweist, der jeweils gleich dem räumlichen Abstand und dem zeitlichen Abstand des zweiten Test-Bildelements von dem ersten Test-Bildelement ist,
Vergleichen der Bildelement-Werte des ersten und des zweiten Test-Bildelements mit den Bildelement-Werten des ersten beziehungsweise des zweiten Vergleichs-Bildelements gemäß einem vorgegebenen Übereinstimmungs-Kriterium,

Festlegen weiterer derartiger Vergleichsgruppen und Vergleichen der Test-Bildelemente mit denen der weiteren Vergleichsgruppen,

Erzeugen eines Maßes der visuellen Aufmerksamkeit für das erste Test-Bildelement in Abhängigkeit von der Anzahl von dafür durchgeführten Vergleichen, wobei der Vergleich eine Fehlübereinstimmung ergibt.

**2.** Verfahren nach Anspruch 1, das umfasst:

Festlegen mindestens einer weiteren Vergleichsgruppe, die enthält: ein erstes weiteres Vergleichselement, das den gleichen räumlichen Abstand von dem ersten Test-Bildelement besitzt, wie ihn das erste Vergleichs-Bildelement aufweist, jedoch einen unterschiedlichen zeitlichen Abstand aufweist, und ein zweites weiteres Vergleichs-Bildelement, das den gleichen Abstand von dem ersten weiteren Vergleichs-Bildelement besitzt, wie ihn das zweite Test-Bildelement von dem ersten Test-Bildelement aufweist, und wobei der Schritt des Vergleichens das Vergleichen der Werte des ersten und des zweiten weiteren Vergleichs-Bildelements mit den Werten des ersten beziehungsweise des zweiten Test-Bildelements beinhaltet.

**3.** Verfahren nach Anspruch 1 oder 2, bei dem die Testgruppe und die Vergleichsgruppe oder jede Vergleichsgruppe mindestens ein zusätzliches Bildelement enthält.

**4.** Verfahren nach Anspruch 1, 2 oder 3, das umfasst:

Festlegen einer Untergruppe der Pixel-Anordnung und Erzeugen des Maßes der visuellen Aufmerksamkeit in Bezug auf Test-Pixel in der Untergruppe.

**5.** Verfahren nach Anspruch 4, das folgende weitere Schritte umfasst:

Identifizieren von einem oder mehreren der Test-Pixel, für das bzw. für die das Maß eine große Anzahl von Fehlübereinstimmungen in Bezug auf die Maße anzeigt, die für andere dieser Test-Pixel erzeugt wurden, und

Erzeugen dieser Maße für weitere Test-Pixel in der Nähe des einen identifizierten Test-Pixels oder der mehreren identifizierten Test-Pixel.

**6.** Verfahren nach einem der vorhergehenden Ansprüche, bei dem, wenn der Vergleich eine Übereinstimmung ergibt, für jedes Test-Pixel ein neuer Abstand für das zweite Test-Bildelement gewählt wird.

**7.** Verfahren nach einem der vorhergehenden Ansprüche, bei dem eine Vielzahl von Test-Bildelementen gleichzeitig analysiert werden.

**8.** Verfahren nach einem der vorhergehenden Ansprüche, bei dem der Wert ein Vektor mit drei Elementen ist, der eine Farbe darstellt.

**9.** Verfahren nach einem der vorhergehenden Ansprüche, bei dem zusätzlich zu Nachbar-Gruppen weitere variable Suchparameter ausgewählt werden.

**10.** Verfahren nach Anspruch 6, bei dem die weiteren variablen Suchparameter einen Schwellenwert für die Ermittlung umfassen, ob zwei Bildelement-Werte im Wesentlichen ähnlich sind.

**11.** Verfahren nach einem der vorhergehenden Ansprüche, das den folgenden weiteren Schritt umfasst:

(a) Identifizieren von Positions-Beziehungen, die zu einer Anzahl von aufeinanderfolgenden Fehlübereinstimmungen führen, die über einem Schwellenwert liegt,
(b) Speichern einer Definition einer jeden solchen identifizierten Beziehung
und
(c) Verwenden der gespeicherten Definitionen für die Verarbeitung von weiteren Test-Pixeln.

**Revendications**

**1.** Procédé de traitement d'une image en mouvement, destiné à identifier des zones d'attention visuelle, comprenant

les étapes consistant à :

stocker des images successives de l'image en mouvement sous la forme de matrices respectives de valeurs d'éléments d'image ;

définir un groupe d'essai d'éléments d'image comprenant un premier élément d'image d'essai et un second élément d'image d'essai ayant un décalage spatial et un décalage temporel par rapport au premier ;

définir un groupe de comparaison d'éléments d'image comprenant un premier élément d'image de comparaison ayant un décalage spatial et temporel par rapport au premier élément d'image d'essai et un second élément d'image de comparaison ayant un décalage spatial et temporel par rapport au premier élément d'image de comparaison respectivement égal au décalage spatial et temporel du second élément d'image d'essai par rapport au premier élément d'image d'essai ;

comparer les valeurs d'éléments d'image des premier et second éléments d'image d'essai avec les valeurs d'éléments d'image des premier et second éléments de d'image comparaison, respectivement, conformément à un critère de correspondance prédéterminé ;

définir d'autres de ces groupes de comparaison et comparer les éléments d'image d'essai avec ceux des autres groupes de comparaison ;

générer une mesure d'attention visuelle pour le premier élément d'image d'essai en fonction du nombre de comparaisons effectuées pour lui où les résultats de comparaison conduisent à un désaccord.

2. Procédé selon la revendication 1, comprenant les étapes consistant à :

définir au moins un autre groupe de comparaison comprenant un premier élément de comparaison supplémentaire ayant le même décalage spatial par rapport au premier élément d'image d'essai que le premier élément d'image de comparaison, mais un décalage temporel différent, et un second autre élément d'image de comparaison ayant le même décalage par rapport au premier autre élément d'image de comparaison que le second élément d'image d'essai a par rapport au premier élément d'image d'essai, et l'étape de comparaison comprend de comparer des valeurs des premier et second éléments d'image de comparaison supplémentaires avec les valeurs des premier et second éléments d'image d'essai, respectivement.

3. Procédé selon la revendication 1 ou la revendication 2, dans lequel le groupe d'essai et le, ou chaque, groupe de comparaison comprend au moins un élément d'image supplémentaire.

4. Procédé selon les revendications 1, 2 ou 3 comprenant de définir un sous-ensemble de ladite matrice de pixels et de générer ladite mesure de l'attention visuelle par rapport à des pixels d'essai dans ledit sous-ensemble.

5. Procédé selon la revendication 4, comprenant les étapes supplémentaires comprenant d'identifier un ou plusieurs desdits pixels d'essai pour lesquels ladite mesure est indicative d'un grand nombre de désaccords par rapport aux mesures générées pour les autres pixels desdits pixels d'essai, et de générer lesdites mesures d'autres pixels d'essai dans le voisinage dudit un ou desdits plusieurs pixels d'essai identifiés.

6. Procédé selon l'une quelconque des revendications précédentes, dans lequel, pour chaque pixel d'essai, si la comparaison conduit à une correspondance, un nouveau décalage pour le second élément d'image d'essai est choisi.

7. Procédé selon l'une quelconque des revendications précédentes, dans lequel une pluralité d'éléments d'image d'essai sont analysés simultanément.

8. Procédé selon l'une quelconque des revendications précédentes, dans lequel la valeur est un vecteur à trois éléments représentatif d'une couleur.

9. Procédé selon l'une quelconque des revendications précédentes, dans lequel, en plus de groupes voisins, d'autres paramètres de recherche variables sont sélectionnées.

10. Procédé selon la revendication 6, dans lequel les autres paramètres de recherche variables comprennent une valeur de seuil pour déterminer si deux valeurs d'éléments d'image sont sensiblement similaires.

11. Procédé selon l'une quelconque des revendications précédentes, comprenant l'étape supplémentaire consistant à :

(a) identifier certaines desdites relations de position qui donnent naissance à un certain nombre de désaccords consécutifs qui dépasse un seuil ;

(b) stocker une définition de chaque telle relation identifiée ; et

(c) utiliser les définitions stockées pour le traitement d'autres pixels d'essai.

Fig. 1

MEMORY

Frames input

CPU

CALCULATION
PROCESSOR

OUTPUT

40
41
42
44
445
442
443
440
444
446
449
448
447
441
43
45

EP 1 316 067 B1

**Fig. 2**

For a pixel $x_0$ — 1

↓

Counts $c_x$ and $I_x$ set to zero — 2

↓

Select *n* pixels in the neighbourhood of x — 5

↓

6 — Select random pixel $y_0$

↓

7 — Increment $I_x$

↓

8

$I_x > L$? — Y → Output $c_x$

N ↓

9

*n* neighbours of x match same neighbours of y?

Y

N ↓

Increment $c_x$ — 10

Figure 3

Figure 6

DX = 2
DY = 3

DX = 3
DY = 2

DX = 4
DY = 2

## Fig. 4

For a pixel $x_0$ — 101

Counts $c_x$ and $I_x$ set to zero — 102

Select a pixel in the neighbourhood of x, in the following frame — 105

106 — Select random pixel $y_0$ in the following frame, and neighbour

107 — Increment $I_x$

$I_x > L$? — Y → Output $c_x$ — 108

N

pixels x match pixels y? — 109

Y

N

Increment $c_x$ — 110

Fig. 5

EP 1 316 067 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 0100504 W